# EUROPEAN PATENT APPLICATION

(11) **EP 1 109 138 A2**
(43) Date of publication of application: **20.06.2001**
(21) Application number: 00310858.6
(22) Date of filing: 06.12.2000
(51) Int. Cl.: G07F 19/00

(54) **Electronic settling system and electronic settling method**

(30) Priority: 06.12.1999 JP 34625399; 10.02.2000 JP 2000033416; 14.03.2000 JP 2000070308; 14.04.2000 JP 2000113969; 25.10.2000 JP 2000324834
(71) Applicant: Japan Electronic Settlement Planning Inc., Tokyo (JP)
(72) Inventor: Matsuo, Taiichi, Matsudo-shi, Chiba (JP); Hisakane, Tatsuya, Tokyo (JP)
(74) Representative: Luckhurst, Anthony Henry William

(57) **Abstract**

An electronic settling system and method capable of executing settlements on the Internet in real time at a decreased cost is provided. The electronic settling system executes a settlement on the Internet (10) using a computer (1). The computer (1) comprises a storage means (1b) for storing financial transaction information of every user, a settling information receiving means (1c) for receiving settling information transmitted from the user through a telecommunication line, a settlement execution means (1d) for executing the settlement between the users based on the settling information received by the settling information receiving means (1c), and an updating means (1e) for updating the financial transaction information of the users stored in the storage means (1b) so as to reflect the content of the settlement executed by the settlement execution means (1d).

## Description

### BACKGROUND OF THE INVENTION

The present invention relates to an electronic settling system and to an electronic settling method for executing settlements on the Internet and/or through a telecommunication line using a computer.

When a customer purchases an article from a shop, it is an accepted practice that the customer makes the settlement by paying in cash or by a credit card to the shop, transferring money, or the like.

As for the settlement by paying in cash, however, the customer must have cash with him or her in advance, which is inconvenient. The settlement based on the transfer of money requires an expensive transfer fee. The settlement using a credit card is not capable of accomplishing the settlement in real time. In addition, a credit card company exists between the customer and the shop, necessitating submission of a bill, leading to a problem of an expensive settlement cost.

### SUMMARY OF THE INVENTION

It is therefore an object of the present invention to provide an electronic settling system and an electronic settling method, which are capable of executing settlements in real time on the Internet and/or through a telecommunication line and at a decreased cost.

In accordance with one aspect of the present invention, an electronic settling system for executing settlements on the Internet is provided. The electronic settling system includes a computer. The computer includes: a storage means for storing financial transaction information of every user; a settling information receiving means for receiving settling information transmitted from the user through a telecommunication line; a settlement execution means for executing a settlement between the users based on the settling information received by the settling information receiving means; and an updating means for updating the financial transaction information of the users stored in the storage means so as to reflect the content of the settlement executed by the settlement execution means.

In a preferred embodiment of the present invention, the settling information receiving means is adapted to receive the settling information transmitted from a portable information terminal of the user.

In a preferred embodiment of the present invention, the financial transaction information of the user stored in the storage means includes settlement history information of the user.

In a preferred embodiment of the present invention, the computer further includes means for transmitting the user's own financial transaction information to a device of the user in response to a request sent from the device of the user, which device is connected to the computer.

In a preferred embodiment of the present invention, the electronic settling system further includes a purchase information input device which includes means for transmitting purchase information that has been input therein to a portable information terminal of the user and means for receiving authenticated purchase information sent from the portable information terminal of the user and for transmitting the settling information based on the authenticated information to the computer. The computer includes means for transmitting the information of settled results to the purchase information input device, when the computer receives the settling information transmitted from the purchase information input device through the settling information receiving means and then executes the settlement using the settlement execution means. The purchase information input device includes means for receiving the information of settled results transmitted from the computer.

In a preferred embodiment of the present invention, the electronic settling system further includes a purchase information input device which includes means for transmitting purchase information that has been input thereinto to a portable information terminal of the user. The computer includes means for transmitting the information of settled results to the purchase information input device, when the computer receives authenticated settling information transmitted from the portable information terminal of the user through the settling information receiving means and then executes the settlement using the settlement execution means, the authenticated settling information being created by receiving the purchase information transmitted from the purchase information input device and authenticating the purchase information. The purchase information input device includes means for receiving the information of settled results transmitted from the computer.

In a preferred embodiment of the present invention, the electronic settling system further includes an automatic vending machine which includes means for receiving information transmitted from a portable information terminal of the user for specifying which article is to be purchased and transmitting the settling information based on the received information to the computer. The computer includes means for transmitting the information of settled results to the automatic vending machine, when the computer receives the settling information transmitted from the automatic vending machine through the settling information receiving means and then executes the settlement using the settlement execution means. The automatic vending machine includes means for discharging the article based on the information of settled results transmitted from the computer.

In a preferred embodiment of the present invention, the electronic settling system further includes an entrance-exit control means arranged at an entrance-exit gate. The entrance-exit control means includes means for receiving authentication information transmitted from a portable information terminal of the user when the user is going to enter the entrance-exit gate. The entrance-exit control means includes means for transmitting admission information to the portable information terminal of the user. The entrance-exit control means includes means for receiving the admission information transmitted from the portable information terminal of the user, calculating a fee based on the admission information, and transmitting the settling information based on the admission information and the fee to the computer when the user is going to exit the entrance-exit gate. The computer includes means for transmitting the information of settled results to the entrance-exit control means, when the computer receives the settling information transmitted from the entrance-exit control means through the settling information receiving means and then executes the settlement using the settlement execution means. The entrance-exit control means includes means for controlling the opening or closing of the entrance-exit gate based on the information of settled results transmitted from the computer.

In a preferred embodiment of the present invention, the computer includes means for transmitting the information of settled results to a portable information terminal which is the source of the information transmission when the computer receives the settling information transmitted from the portable information terminal through the settling information receiving means and then executes the settlement using the settlement execution means.

In a preferred embodiment of the present invention, the electronic settling system is adapted for a settlement between a customer as one of the users and a shop as the other one of the users on the Internet. At least some of articles provided by the shop are provided with a settlement restriction inhibiting a spot settlement so as to allow cancellation of the contract for a fixed period of time after the purchase of an article. When an article with a settlement restriction is to be purchased by the customer and the settling information is sent to the computer, this settling information is made to include the settlement restriction information. In a case that the settling information includes the settlement restriction information, the settlement execution means of the computer executes the formal settlement, after the fixed period of time has elapsed, based on the settlement restriction information.

In a preferred embodiment of the present invention, the electronic settling system is adapted for a settlement between a customer as one of the users and a shop as the other one of the users on the Internet. At least some of articles provided by the shop are provided with a settlement restriction restricting the purchase of an article by particular customers. When an article with a settlement restriction is to be purchased by the customer and the settling information is sent to the computer, this settling information is made to include the settling information. In a case that the settling information includes the settlement restriction information, the settlement execution means of the computer distinguishes whether the customer is included under the particular customers, and executes the settlement, based on the result of the distinction.

In a preferred embodiment of the present invention, the electronic settling system further comprises a ticket vending apparatus which includes a means for sending inputted ticket purchase information to a portable information terminal of a user, and a means for receiving authenticated ticket purchase information sent from the portable information terminal of the user and sending settling information based on the authenticated ticket purchase information to the computer. The computer comprises a means for, when the settling information sent from the ticket vending apparatus is received by the settling information receiving means and the settlement is executed by the settlement execution means, sending the settlement result information to the ticket vending apparatus. The ticket vending apparatus comprises a means for receiving the settlement result information sent from the computer, and sending ticket data about the ticket of which settlement has been established to the portable information terminal of the user.

In a preferred embodiment of the present invention, the electronic settling system further comprises a ticket vending apparatus which includes a means for sending inputted ticket purchase information to a portable information terminal of a user. The computer comprises a means for, when the settling information which is sent from the portable information terminal of the user and which is the ticket purchase information sent from the ticket vending apparatus and authenticated is received by the settling information receiving means, and the settlement is executed by the settlement execution means, sending the settlement result information to the ticket vending apparatus. The ticket vending apparatus comprises a means for receiving the settlement result information sent from the computer, and sending ticket data about the ticket of which settlement has been established to the portable information terminal of the user.

In a preferred embodiment of the present invention, the electronic settling system further comprises a means for receiving a ticket data memorized in the portable information terminal of the user when the ticket data is sent, and a means for authenticating the received ticket data, disposed at the entrance for admitting entry of the user provided that the ticket is presented.

In a preferred embodiment of the present invention, the storage means includes a data file for every user, and one the data file integrates financial transaction information of the one user. When the computer reads out the financial transaction information of a user, the computer specifies the data file of the user and reads out this data file.

In a preferred embodiment of the present invention, the computer comprises a plurality of database servers. The storage means of each database server includes the data file of each of a plurality of users.

In a preferred embodiment of the present invention, the computer reads out the data file of a user, by finding the data file server where the data file of this user is stored and the storage location of the data file for this user in the storage means of this database server, based on the user's branch number and account number.

In a preferred embodiment of the present invention, a particular one of the database servers is provided in the storage means thereof with a main data file for particular users, and the plurality of other the database servers are each provided in the storage means thereof with an auxiliary data file for the particular users. Financial transaction information of the auxiliary data file is sent to the particular said database server, and financial transaction information of the particular users is integrated in the main data file.

In a preferred embodiment of the present invention, upon the receipt of settling information sent through the telecommunication line, the computer performs the process of withdrawing the payment from the payer's account, based on this settling information, and sends information about the completion of the process of withdrawing to the settling information sender when the process of withdrawing the payment is completed. After the transmission of the information about the completion of the process of withdrawing, the computer performs the process of depositing the payment in the payee's account.

In a preferred embodiment of the present invention, upon the receipt of settling information sent through the telecommunication line, the computer creates a log file based on this settling information and memorizes the created log file in a log file database. The settlement execution means of the computer performs the settlement based on the contents of the log file memorized in the log file database.

In accordance with this aspect of the present invention, an electronic settling system for executing settlements on the Internet is provided. The electronic settling system includes a computer. The computer includes: a user electronic money data storage means for memorizing user electronic money data; an issuer electronic money data storage means for memorizing electronic money data when electronic money is issued; a receiving means for receiving electronic money issuance demand information sent from a portable information terminal of a user; a means for sending, upon the receipt of electronic money issuance demand information, electronic money data based on this electronic money issuance demand information from the user electronic money data storage means corresponding to the electronic money issuance demand information to the issuer electronic money data storage means, to thereby memorize the electronic money data in the issuer electronic money data storage means; and an electronic money issuance means for transmitting the electronic money data memorized in the issuer electronic money data storage means to a portable information terminal of a predetermined one of the users, based on the electronic money issuance demand information.

In a preferred embodiment of the present invention, the computer further comprises a means for receiving an electronic money data sent from a portable information terminal of the user and memorizing this received electronic money data in the user electronic money data storage means for a predetermined user, based on this electronic money data.

In accordance with this aspect of the present invention, an electronic settling system for executing settlements is provided. The electronic settling system includes a card information processing apparatus and a card authentication apparatus. The card information processing apparatus includes a means for receiving, when credit card or debit card or other card information memorized in a portable information terminal of a user is sent from this portable information terminal, such card information, and sending this card information to the card authentication apparatus. The card authentication apparatus includes a means for receiving the card information sent from the card information processing apparatus, performing predetermined authentication based on this card information, and then sending authentication result information to the card information processing apparatus. The card information processing apparatus includes a means for receiving the authentication result information sent from the card authentication apparatus.

In accordance with another aspect of the present invention, an electronic settling method for executing settlements on the Internet using a computer is provided. The method includes the steps of: storing financial transaction information of every user in the computer; upon receipt of settling information transmitted from the user through a telecommunication line, executing the settlement between the users based on the settling information; and updating the financial transaction information of the users.

In a preferred embodiment of the present invention, the financial transaction information of the user stored in the computer includes settlement history information of the user.

According to the present invention, a computer for executing settlements on the Internet is arranged so as to play the role of an electronic bank. The storage means of the computer is provided with a storage region corresponding to an account of each of users and where financial transaction information of the user is stored. When a settlement is instructed by the user, the financial transaction information of the users is updated due to a transaction, such as transferring a predetermined amount of money from the user's account to another user's account, or the like.

Thus, the settlement is accomplished in real time and at a greatly decreased cost.

### BRIEF DESCRIPTION OF THE DRAWINGS

These and other objects and many of the attendant advantages of the present invention will be readily appreciated as the same becomes better understood by reference to the following detailed description when considered in connection with the accompanying drawings; wherein
Fig. 1 is a schematic view illustrating an embodiment of an electronic settling system according to the present invention;
Fig. 2 is a flow chart showing one embodiment of settlement processing according to the electronic settlement system of the present invention;
Fig. 3 is a view illustrating a settlement executed when a customer purchases an article at a shop;
Fig. 4 is a view illustrating a settlement executed when a customer purchases an article from an automatic vending machine;
Fig. 5A and 5B are views illustrating a settlement executed when a customer goes on board or off the board of a train;
Fig. 6 is a view illustrating a settlement between customers;
Fig. 7A is a view illustrating a settlement executed when a customer purchases an article from a shop, wherein the contract can be canceled for a fixed period of time after the purchase of the article;
Fig. 7B is a view illustrating a settlement executed when a purchase restriction is set for articles;
Fig. 8 is a view illustrating a manner in which electronic money is taken into a portable information terminal and used;
Fig. 9 is a view illustrating a settlement executed using a portable information terminal in place of a credit card or the like;
Fig. 10 is a view illustrating a settlement executed when a customer purchases a ticket;
Fig. 11 is a block diagram showing the schematic arrangement of servers in the electronic bank;
Fig. 12 is a view illustrating a constitution of an account database;
Fig. 13 is a view showing a plurality of account databases, a main data file and an auxiliary data file; and
Figs. 14A and 14B are views showing contents of a log database and a log file stored in the log data base, respectively.

### DETAILED DESCRIPTION OF THE PREFERRED EMBODIMENTS

Described below are an electronic settling system and an electronic settling method according to an embodiment of the present invention. According to the invention, settlements are executed on the Internet 10 using a computer 1. The computer or host computer 1 which executes electronic settlements functions as a so-called electronic bank (in the embodiment, the computer is hereinafter referred to as electronic bank) and executes the settlements without using a network of branches of the bank that has been conventionally used.

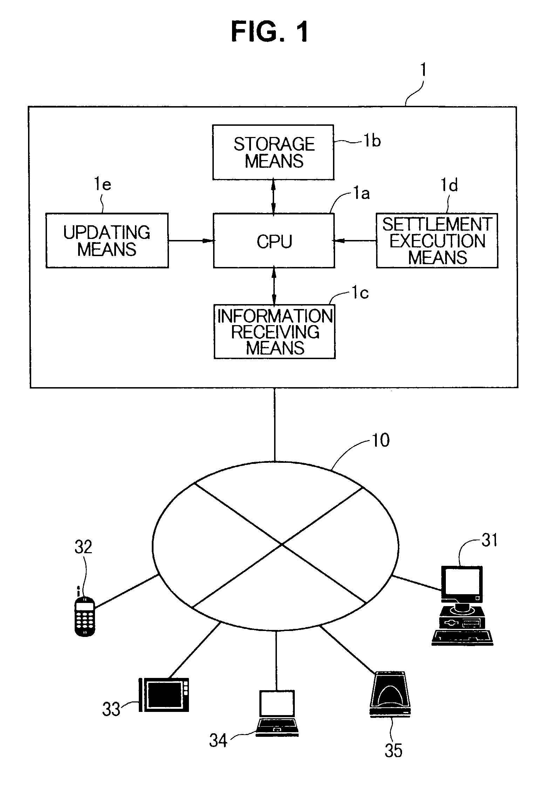

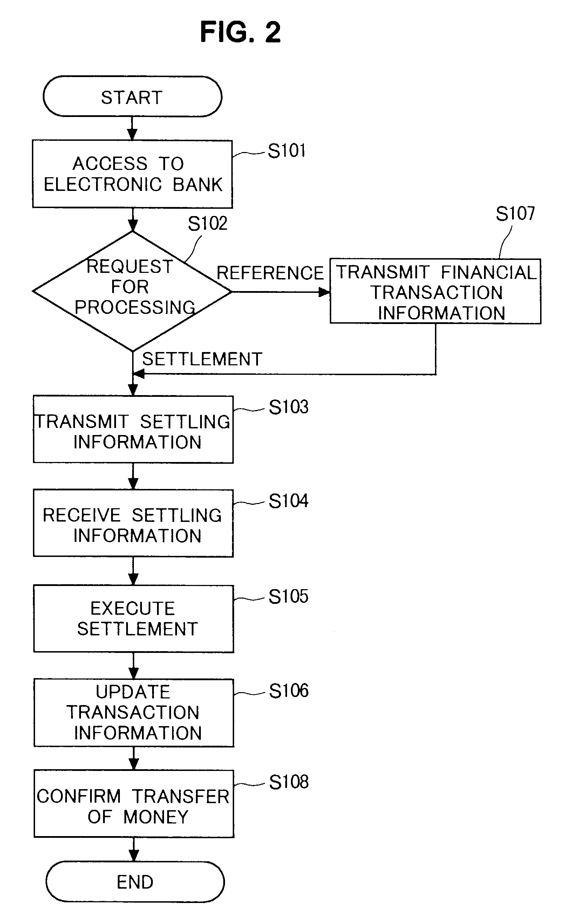

In the embodiment illustrated in Figs. 1 and 2, the electronic bank 1 includes a CPU la for controlling whole the electronic bank 1. The electronic bank 1 also has a storage means lb which stores financial transaction information of every user corresponding to accounts of the users. The financial transaction information includes balance in account, information or data related to history of settlements, etc.

To effect a settlement, as shown in Fig. 2, the user has access to the electronic bank 1 on the Internet 10 by using his or her own terminal such as personal computer 31 (step S101), and operates the terminal 31 (step S102) to transmit settling information to the electronic bank 1 (step S103).

When the electronic bank 1 receives the settling information through a settling information receiving means lc thereof (step S104), the electronic bank 1 executes the settlement between the users based on the settling information using a settlement execution means 1d thereof (step S105). The settlement is executed according to the instruction that transferring, for example, 100 dollars from an account of a user to an account of another user takes place.

After the settlement is executed, the electronic bank 1 updates the financial transaction information of the two users using an updating means 1e (step S106).

In this instance, means which the user uses to make access to the electronic bank 1 is not limited to the personal computer 31 only but may be a variety of media such as a mobile phone 32, a car navigation system 33, a satellite or cable TV 34, a video game terminal 35, or the like, which are capable of transmitting and receiving settling information.

The user may have access to the electronic bank 1 by using the terminal 31 or the like (step S101) to draw out the content of his or her own account, such as information or data related to balance in account, history of settlements, or the like, from the electronic bank 1. That is, when the electronic bank 1 receives a request transmitted from the terminal or personal computer 31 or the like (step S102), the electronic bank 1 transmits financial transaction information of the user to the personal computer 31 or other terminal (step S107) through the means 1c.

When the user or customer purchases an article at a shop, the customer uses his or her mobile phone 32 to transmit, to the electronic bank 1, the settling information that the amount of money corresponding to the price of the article is transferred from the customer's account to the shop's account. The electronic bank 1 executes the settlement as soon as it receives the settling information. Similarly, the shop may use a personal computer, a telephone, a mobile phone or the like to make sure whether the money for the article has been transferred from the customer's account to the shop's account (step S108).

Thus, the settlement is accomplished in real time. Moreover, the cost for the settlement can be greatly decreased. Unlike the existing banks, further, there is no limitation on the business hours; i.e., the electronic bank can provide 24-hour service. The number of persons engaged in the service can be greatly decreased, to thereby decrease the personnel expenditures.

Next, the electronic settling system will be concretely described.

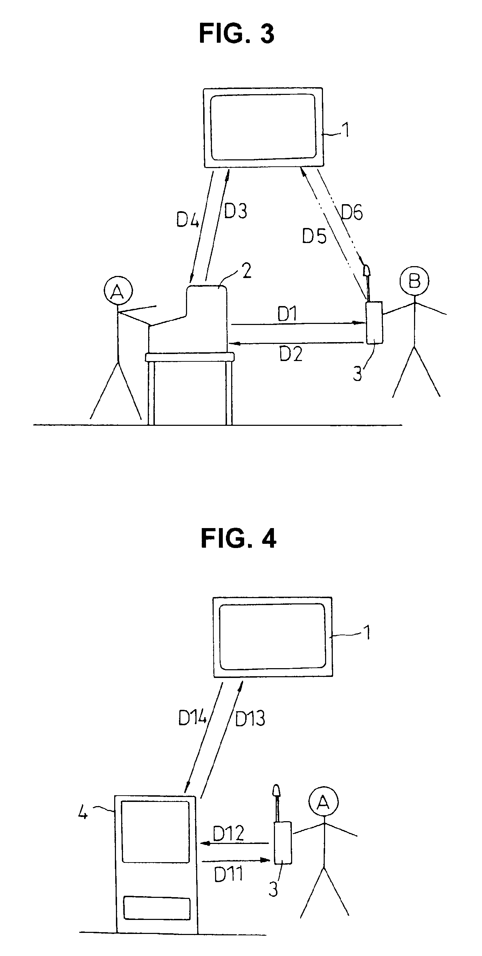

### (1) When a customer purchases an article at a shop (Fig. 3):

Referring to Fig. 3, a checkout counter of a shop is provided with a cash register 2 which is a purchase information input device. The cash register 2 is capable of transmitting and receiving information to and from the electronic bank 1 through a dedicated line.

A customer B carries an article which he or she wishes to purchase to the checkout counter. At the checkout counter, a salesperson A of the shop reads a bar code attached to the article so that purchase information is taken in the cash register 2.

The customer B is carrying a portable information device (mobile phone, etc.) 3 with him or her. The portable information device 3 is capable of transmitting and receiving information to and from the cash register 2.

The salesperson A of the shop transmits the purchase information (total amount of money, etc.) taken in the cash register 2 to the portable information device 3 of the customer B (D1). Thus, the purchase information is stored in the portable information device 3 of the customer B. This saves the customer B the trouble of inputting the purchase information such as the price of an article which he or she is going to purchase to his or her own portable information device 3.

The customer B authenticates the purchase information which has been received by the portable information device 3. Any method may be employed for the authentication, such as inputting a password by the customer B or authenticating through a fingerprint.

Next, the customer B sends the purchase information thus authenticated back to the cash register 2 from the portable information device 3 (D2). Accordingly, the cash register 2 receives information that the customer B has authenticated the purchase information. Then, the cash register 2 transmits a settling information based on the above information to the electronic bank 1 (D3).

The electronic bank 1 receives the settling information transmitted from the cash register 2 and executes a settlement. After the settlement is executed, the information of settled results, i.e. information or data as to whether the settlement is properly executed is sent to the cash register 2 (D4). Thus, the shop is allowed to know whether the settlement is properly executed.

Even when the settlement cannot be executed such as when the balance in account of the customer B is not sufficient in the electronic bank 1, this fact is transmitted as the information of settled results to the cash register 2 in the same manner as described above.

In light of the information of settled results, therefore, the shop judges whether the article should be handed over to the customer B.

The settlement can be accomplished even by the following method instead of the above-mentioned method.

First, the purchase information is transmitted from the cash register 2 to the portable information device 3 of the customer B and, then, the customer B authenticates the purchase information in the same manner as described above.

However, the customer B directly transmits the authenticated purchase information to the electronic bank 1, making a difference from the above-mentioned embodiment. That is, the portable information device 3 possessed by the customer B is capable of transmitting and receiving information to and from the electronic bank 1 (D5, D6).

After having authenticated the purchase information, the customer B transmits the settling information based on the authenticated purchase information to the electronic bank 1 (D5). Upon receipt of the settling information, the electronic bank 1 executes the settlement and, then, transmits the information of settled results to the cash register 2 (D4) in the same manner as described above.

### (2) When a customer purchases an article from an automatic vending machine (Fig. 4):

The following method is employed when a he customer A purchases an article from an automatic vending machine 4.

Referring to Fig. 4, the automatic vending machine 4 is capable of transmitting and receiving information to and from an electronic bank 1. Further, a portable information device 3 possessed by the customer A is capable of transmitting and receiving information to and from the automatic vending machine 4.

When the customer A selects an article, predetermined information is transmitted from the automatic vending machine 4 to the portable information device 3 of the customer A (D11). The information is, for example, that leads the customer A to input the item number of the article. Based on this information, the customer A inputs, to the portable information device 3, the item number of the article which he or she wishes to purchase to thereby specify the article and transmits the information to the automatic vending machine 4 (D12).

Upon receipt of the information, the automatic vending machine 4 transmits settling information based on the above information, e.g., transmits the information or data related to particulars of the article, price, etc. to the electronic bank 1 (D13). In this instance, the transmission may be directly from the automatic vending machine 4 to the electronic bank 1, or through a company managing the automatic vending machine 4.

Then, upon receiving the settling information transmitted from the automatic vending machine 4, the electronic bank 1 executes a settlement and transmits the information of settled results to the automatic vending machine 4 (D14).

The automatic vending machine 4 controls the discharge of the article based on the information of settled results transmitted from the electronic bank 1. That is, when the information of settled results transmitted from the electronic bank 1 indicates that the settlement has been properly executed, the automatic vending machine 4 permits the discharge of the article. On the contrary, when the information indicates that the settlement cannot be executed due to, for example, lack of balance in account of the customer A, this fact is displayed on the automatic vending machine 4 or the information indicating this fact is transmitted to the portable information device 3 of the customer A.

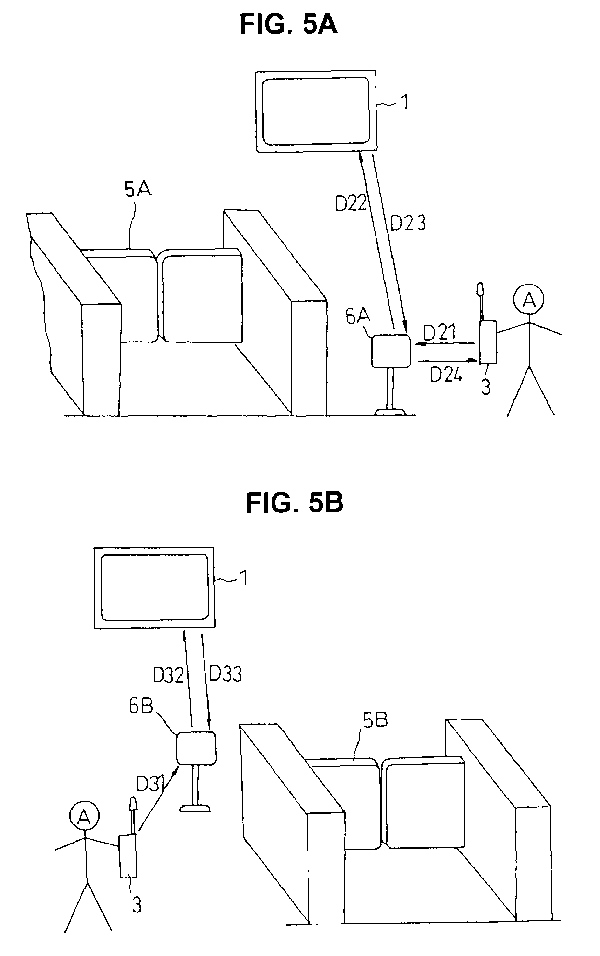

### (3) When a customer utilizes a railway, vehicle, airplane, ship, toll road or the like (Figs. 5A and 5B):

This embodiment deals with a settling method executed when a customer A goes on board or off board a train.

In Figs. 5A and 5B, an entrance-exit control means or information transmitter-receiver 6A or 6B is provided each entrance-exit gate 5A or 5B such as a ticket wicket for a train to transmit and receive information to and from an electronic bank 1.

A portable information device 3 used by the customer A for going on board or off board the train, is capable of transmitting and receiving information to and from the entrance-exit control means 6A or 6B.

Referring, first, to Fig. 5A, when the customer A enters through the entrance-exit gate 5A, authentication information is transmitted from the portable information device 3 of the customer A to the entrance-exit control means 6A (D21). Upon receipt of the authentication information, the entrance-exit control means 6A transfers this information to the electronic bank 1 (D22) to make sure whether an account of the customer A has been opened in the electronic bank 1. After having authenticated the customer A, the electronic bank 1 sends the thus authenticated information back to the entrance-exit control means 6A (D23). Based upon the authenticated information, the entrance-exit control means 6A opens the entrance-exit gate 5A and transmits admission information to the portable information device 3 (D24). The admission information includes, for example, the name of a station where the customer gets on board.

Upon receiving the admission information from the entrance-exit control means 6A, the portable information device 3 stores the admission information in a storage means in the portable information device 3.

Next, when the customer A gets out of the train and exits through the entrance-exit gate 5B, the admission information stored at the time of entrance is transmitted from the portable information device 3 to the entrance-exit control means 6B (D31) as shown in Fig. 5B.

Upon receipt of the admission information transmitted from the portable information device 3, the entrance-exit control means 6B calculates the fees based on the admission information. Then, settling information based on the above information is transmitted to the electronic bank 1 (D32).

The electronic bank 1 receives the settling information transmitted from the entrance-exit control means 6B and executes a settlement by using a settlement execution means. Then, the information of settled results, i.e. information or data related to whether the settlement is properly executed, is transmitted to the entrance-exit control means 6B (D33).

Based on the information of settled results transmitted from the electronic bank 1, the entrance-exit control means 6B controls the opening and closing of the entrance-exit gate 5B. When it is so judged that the settlement is properly executed based on the information of settled results, the entrance-exit gate 5B is opened to permit the customer A to exit therethrough.

When it is not judged that the settlement is property executed from the information of settled results, the entrance-exit gate 5B is closed so as not to permit the customer A to exit.

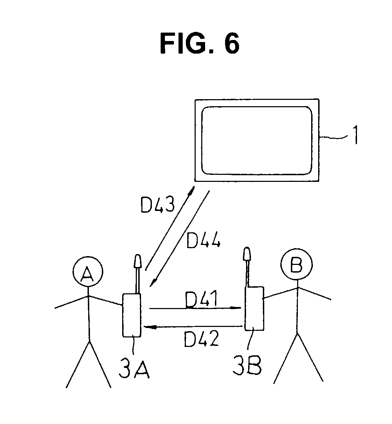

### (4) A settlement between customers (Fig. 6):

Referring to Fig. 6, a customer A and a customer B are, respectively, carrying portable information devices 3A and 3B for transmitting and receiving information to and from an electronic bank 1.

A settlement is executed between the customer A and the customer B in a manner as described below. In this case, the customer B pays a predetermined amount of money to the customer A.

First, the customer A transmits, by using his or her own portable information device 3A, bill information to the portable information device 3B of the customer B to demand the predetermined amount of money (D41).

Upon receipt of the bill information, the customer B authenticates the information and sends the authenticated bill information back to the portable information device 3A of the customer A (D42).

When the customer A receives the authenticated information by his or her portable information device 3A, the customer A transmits it to the electronic bank 1 as settling information (D43). Upon receiving the settling information, the electronic bank 1 executes a settlement, and sends the information of settled results back to the portable information device 3A of the customer A (D44).

Accordingly, the portable information device 3A of the customer A receives the information of settled results enabling the customer A to know on the spot whether the settlement is properly executed.

Upon receiving the bill information from the customer A, the customer B may authenticate the bill information and may directly transmit the settling information from the portable information device 3B of the customer B to the electronic bank 1, which settling information indicates that the settlement should be executed. Then, the electronic bank 1 may transmit the information of settled results to the portable information device 3A of the customer A. To do this, however, the telecommunication line must be connected twice between the electronic bank 1 and the customers A and B.

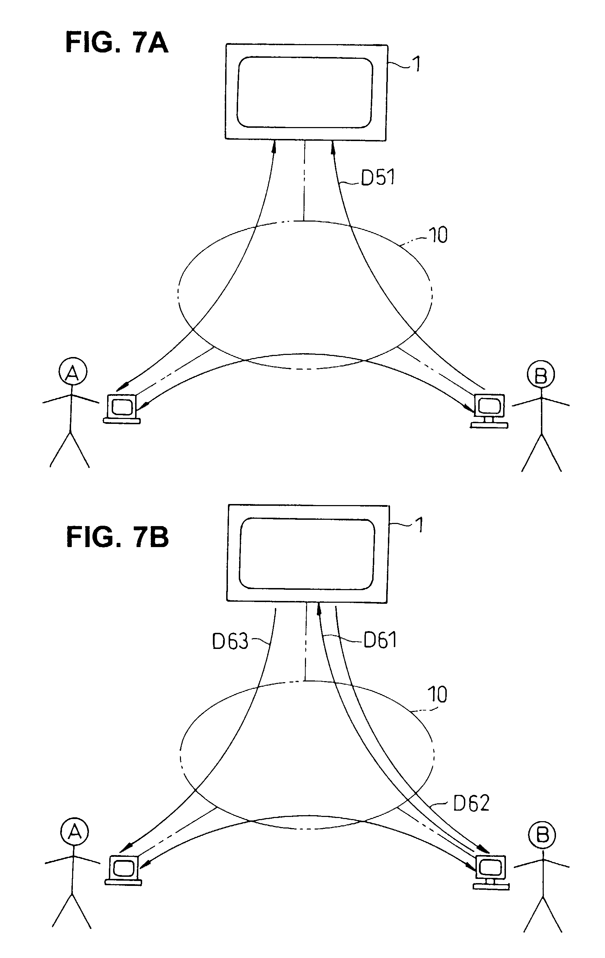

### (5) When a customer purchases an article from a shop, wherein the contract can be cancelled for a fixed period of time after the purchase of the article (Fig. 7A):

A customer B, who has selected an article he/she wants to buy on the Internet 10, sends settling information to an electronic bank to transfer money for the article from his/her account to the shop's account (D51).

In this case, the settling information is provided with settlement restriction information inhibiting a spot settlement so as to allow cancellation of the contract for a fixed period of time after the purchase of the article. This protects the customer, by inhibiting the spot settlement so as to allow cancellation of the contract, i.e. cooling-off, for a fixed period of time after the purchase of the article. Then, a formal settlement is executed when this fixed period of time has elapsed, and during the fixed period of time after the purchase of the article, a provisory settlement is executed.

Upon the receipt of the settling information from the customer B, the electronic bank 1 executes the settlement between the customer B and the shop A, based on this settling information. For instance, the settlement is executed, according to the information indicating that money of 100 dollars is transferred from the customer's account to the shop's account, or the like.

In this instance, the electronic bank 1 distinguishes whether the settling information includes settlement restriction information, in a case that the electronic bank 1 distinguishes that the settling information includes the settlement restriction information, the electronic bank 1 executes the formal settlement when this fixed period of time has elapsed, based on this settlement restriction information.

More particularly, though money for the article is transferred from the customer's account to the shop's account, the shop is disable to dispose of this money. Then, concerning the settling information with the settlement restriction information, the electronic bank 1 distinguishes whether the fixed period of time has elapsed or not, and when the fixed period of time has elapsed, the electronic bank 1 allows the shop to dispose of this money, or the like, by removing this settlement restriction information, or others.

On the other hand, during this fixed period of time, when the customer B has requests cancellation of the contract or the like, the electronic bank 1 brings the accounts into a state before the settlement between the customer and the shop.

In place of transferring immediately money from the customer's account to the shop's account, during a fixed period of time, the money may be stored provisionally in an account held by the electronic bank, and then transferred to the shop's account when it is distinguished that the fixed period of time has elapsed.

### (6) When a purchase restriction is set for articles (Fig. 7B):

It is proceeded as follows for articles which are provided with a restriction restricting the purchase of the articles by particular customers, such as alcoholic drinks not to be sold to minors.

First, when such a restriction is imposed on articles of a certain shop A on the Internet, these articles shall be provided with settlement restriction information, such as information not to accept settlement requested from minors.

Suppose a customer B who is a minor attempts to purchase an alcoholic drink on the Internet. In this case, the customer B sends settling information to an electronic bank 1 to transfer money for the article or alcoholic drink from his/her account to the shop's account (D61).

The electronic bank 1, upon the receipt of this settling information, distinguishes whether the customer B is a minor or not from the customer authentication information. Moreover, the settling information sent to the electronic bank 1 by the customer B includes article purchase information, and this article purchase information also includes the settlement restriction information, and further, the electronic bank 1 distinguishes the contents of this settlement restriction information.

Then, the electronic bank 1 restricts the settlement, when the electronic bank 1 distinguishes that the customer is a minor based on the customer authentication information, and when it distinguishes that this article is not to be sold to the minor based on the settlement restriction information.

In this case, the electronic bank 1 may send, uniformly, a reply stating that such settlement can not be accepted (D62). Alternatively, the electronic bank 1, in the case mentioned above, may send such settling information to the shop A, and the shop A may distinguish that the shop may admit or not such a settlement (D63). Then, the shop A transmits the distinction results to the electronic bank 1. Next, the electronic bank 1 decides to execute the settlement or not to execute, based on the distinction results sent from the shop A.

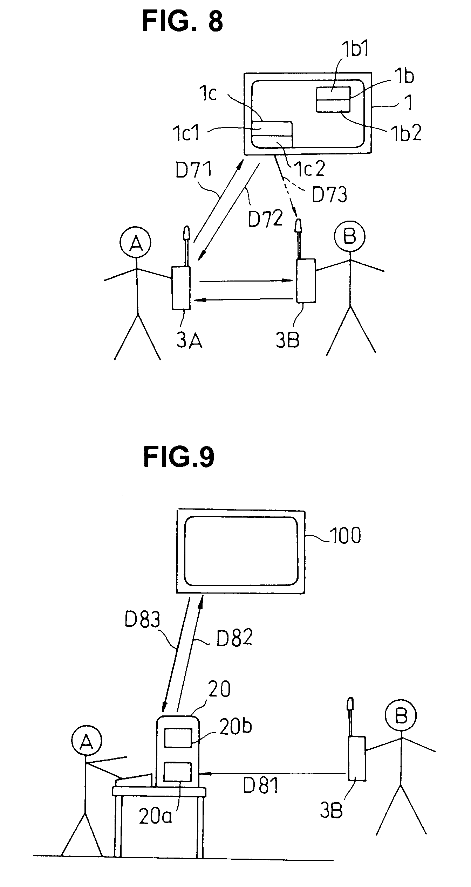

### (7) When electronic money is taken into a portable information terminal and used (Fig. 8):

In this case, the electronic bank 1 is provided with a user electronic money data storage means lbl for memorizing user electronic money data. The user electronic money data storage means lbl memorizes the balance of the user's electronic money or the like, and is similar to an account. A user A takes the procedure to convert cash into electronic money to store the electronic money data in the user electronic money data storage means lbl.

Then, using his/her portable information terminal 3A, the user A can transmit information demanding that electronic money is sent to the portable information terminal 3A (electronic money issuance demand information), to the electronic bank 1.

When the user A sends electronic money issuance demand information from the portable information terminal 3A to the electronic bank 1 (D71), the electronic bank 1 receives this electronic money issuance demand information through a receiving means 1c1. This electronic money issuance demand information also includes the user ID, receiver, or the like.

In addition, the electronic bank 1 is provided with an issuer electronic money data storage means 1b2. This issuer electronic money data storage means 1b2 is, so to speak, similar to an account at the electronic bank 1.

Then, the electronic bank 1 identifies the ID of the user from the received electronic money issuance demand information, withdraws electronic money of the specified amount (or electronic money data), from the user electronic money data storage means lbl corresponding to this ID, and transfers it to the issuer electronic money data storage means 1b2.

Next, the electronic bank 1 transmits the electronic money data memorized in the issuer electronic money data storage means 1b2 to the portable information terminal 3A through an electronic money issuance means 1c2, based on the electronic money issuance demand information (D72). In this instance, the electronic bank 1 sends the electronic money data to a predetermined portable information terminal, based on the receiver contained in the electronic money issuance demand information (D73). Therefore, the user A can take the electronic money data into his/her portable information terminal 3A, and further, send to a portable information terminal 3B of the other user B.

Thereby, as the electronic money data is sent from the electronic bank 1 to the portable information terminal 3A, this electronic money data is taken into the portable information terminal 3A and memorized therein.

The aforementioned processing results in electronic money of the demanded amount being stored into the portable information terminal 3A.

Then, the user A can settle with the other user B, by paying/receiving electronic money electrically. More particularly, the portable information terminal 3A or 3B held by a respective user A or B can receive electronic money data sent from the other user, and at the same time, can send electronic money data to the portable information terminal of the other user, in the extent of electronic money memorized in his/her portable information terminal 3A or 3B. Such exchange of electronic money data is also permitted between the user or customer and a shop. Through the aforementioned exchange of electronic money data, electronic money data circulates from place to place.

Moreover, the user A can restore electronic money data stored in the portable information terminal 3A to his/her account in the user electronic money data storage means lbl of the electronic bank 1. In other words, the portable information terminal 3A is provided with a means for sending memorized electronic money data to the electronic bank 1. The data to be sent includes the user ID, or information for specifying the user's account in the user electronic money data storage means lbl as well as the electronic money data itself.

Then, the electronic bank 1 receives the sent electronic money data and memorizes the same in the user electronic money data storage means lbl. Moreover, the portable information terminal 3A can also send the stored electronic money data to an account of the other user in the user electronic money data storage means 1b1.

In the illustrated embodiment, as described above, it is possible to take electronic money in the portable information terminal, to thereby send electronic money to the other portable information terminal and receive electronic money from the other portable information terminal vice versa. Therefore, a settlement can be executed between the portable information terminals like that in cash, without carrying around hard cash.

### (8) When settlements are executed using a portable information terminal in place of a credit card or the like (Fig. 9):

In this example, the portable information terminal 3B is provided with a card information storage means for memorizing card information, such as credit card or debit card or other card information. The card information includes card number, term of validity, card holder name, PIN code, or the like.

When a user B wants to make a payment using the portable information terminal 3B as a credit card or the like, for instance, in a shop or the like, he/she inputs a type of card to use for the payment into the portable information terminal 3B. For example, "1" is input for a credit card, and "2" for a debit card.

After input of the type of card to use for the payment, it is sent to a card information processing apparatus (computer or others) 20 provided at the shop or the like (D81). This card information processing apparatus 20 which is conventionally known and into which card number or equivalents to magnetic data of the card, and the like are input, sends this information to a card authentication company.

This card information processing apparatus 20 is provided with a means 20a for receiving card information sent from the portable information terminal 3B. When the card information processing apparatus 20 receives this card information, the card information processing apparatus 20 sends the card information to a card authentication apparatus 100 provided at the card authentication company for authenticating this card (D82).

When the card authentication apparatus 100 receives the card information sent from the card information processing apparatus 20, the card authentication apparatus 100 authenticates by judging the term of validity, legality or the like of the card, and then sends authentication result information to the card information processing apparatus 20 (D83).

The card information processing apparatus 20 receives the authentication result information sent from the card authentication apparatus 100 using a receiving means 20b, and executes a settlement based on the received authentication result information.

Through the aforementioned processing, the user need not carry various kinds of cards as before, and the user can specify the card with which he/she wants to make a payment by using a portable information terminal.

In this instance, including the case (7) described above, it may be constructed to allow the portable information terminal to select a payment with electronic money or with a card.

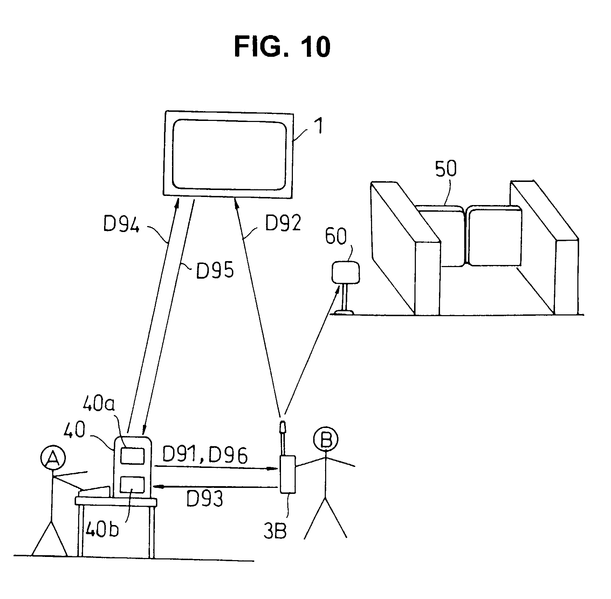

### (9) When a customer purchases a ticket (Fig. 10):

In this case, a ticket office or seller is provided with a ticket vending apparatus (computer or the like) 40. In this instance, the ticket includes an admission ticket, a railroad, bus or streetcar ticket, a gift certificate, a theater admission ticket, and the like.

When a customer B purchases a ticket, the ticket seller inputs ticket purchase information to the ticket vending apparatus 40, and sends the ticket purchase information to a portable information terminal 3B of the customer B (D91) using a first sending-receiving means 40a.

When the customer's portable information terminal 3B receives the ticket purchase information, the customer B checks its contents, and authenticates this ticket purchase information. Next, settling information based on the authenticated ticket purchase information is sent directly from the portable information terminal 3B to the electronic bank 1 (D92), or the authenticated ticket purchase information is sent from the portable information terminal 3B to the ticket vending apparatus 40 (D93) and, then, the ticket vending apparatus 40 sends the settling information based on the authenticated ticket purchase information to the electronic bank 1 (D94).

The electronic bank 1 receives the settling information sent from the portable information terminal 3B or the ticket vending apparatus 40, executes the settlement, and sends the settlement result information to the ticket vending apparatus 40 (D95).

The ticket vending apparatus 40 receives the settlement result information sent from the electronic bank 1 using a second sending-receiving means 40b. Then, when the ticket seller confirms that this settlement has been established properly, the ticket vending apparatus 40 sends ticket data concerning the settled ticket to the portable information terminal 3B (D96).

The customer's portable information terminal 3B includes a means for receiving and memorizing the sent ticket data. Thereby, the ticket data memorized in the portable information terminal 3B plays just the role of the conventional ticket.

The portable information terminal 3B also includes a means for sending the ticket data to a predetermined apparatus. For instance, in a theater or the like, an entrance control apparatus 60 is disposed at an entrance 50 thereof for admitting entry of the customer, provided that a ticket is presented. The customer B sends the memorized ticket data from the portable information terminal 3B to this entrance control apparatus 60. The entrance control apparatus 60 is constructed so as to receive the ticket data sent from the portable information terminal 3B, and to authenticate this received ticket data.

The aforementioned process allows the entry of the customer by checking the ticket automatically with the entrance control apparatus, and thus, to check the ticket without human labor.

In each of the examples described above, when the authenticated purchase information or the like is to be sent to a device or apparatus, such as a register, vending machine, entrance/exit control means, other portable information terminal, card information processing apparatus, or ticket vending apparatus, or the like, it is preferable that the portable information terminal be provided therein with a means for encoding the information to be sent so as to send the encoded information to the other device or apparatus, to thereby improve the security.

Now, a concrete system construction of the electronic bank or computer 1 in this embodiment will be described.

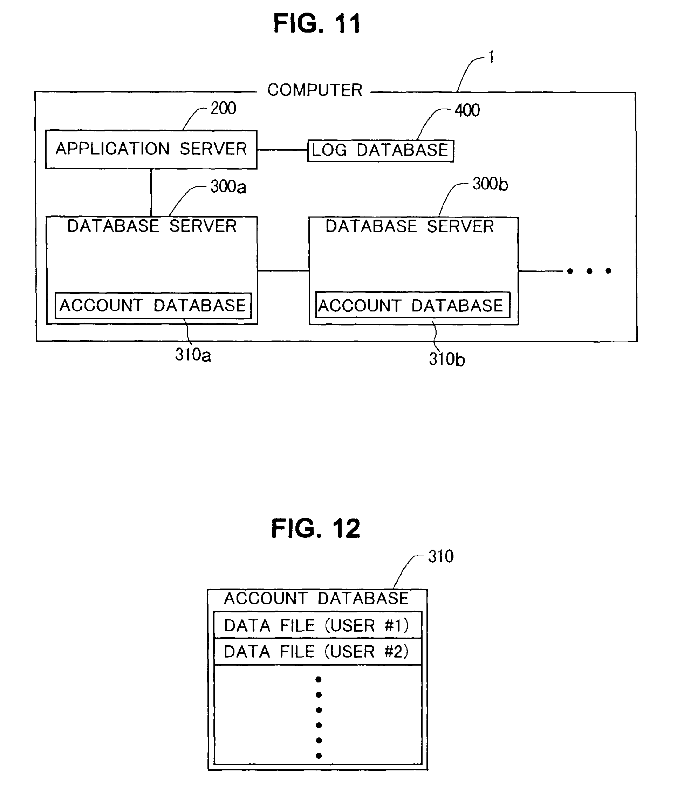

Fig. 11 is a block diagram showing a schematic arrangement of servers for the electronic bank 1. As shown in Fig. 11, the electronic bank 1 is composed by dividing into a plurality of servers which are electrically connected to each other so as to allow mutual communication. The electronic bank 1 includes an application server 200 for executing the program and a plurality of database servers 300 (300a, 300b,...). Further, the electronic bank 1 includes a log data server 400 (mentioned below).

Each of the database servers 300 includes an account database 310 (310a, 310b,...) which stores information concerning the accounts as a storage means for memorizing the financial transaction information of the users.

The account database 310 is provided with a number of data files for every user, as shown in Fig. 12. For example, one account database 310 is provided with data files for several ten thousands users. Each of the data files integrates financial transaction information of one user. More particularly, one data file memorizes information about the account of one user, for instance, settlement history, depositing/withdrawal history, balance of the account, or the like.

In this instance, it would be devised to store financial transaction information of all users in one account database and to control such financial transaction information by a single database server. However, if the number of data of the account database increases, the load increases, leading to impeding a rapid access. Therefore, the number of data in the account database 310 in one database server 300 is limited to the number that can be sufficiently controlled by the capacity of the database server 300, and thus a plurality of database servers 300 and a plurality of account databases 310 are disposed. When the number of users or accounts increases, the number of database servers 300 and account databases 310 will be increased.

When the capacity of one database server reaches its limit, for instance, it becomes necessary to increase the CPU capacity or memory capacity of the database server. However, even in this measurement, there is a certain limit to maintain the processing speed.

Moreover, when financial transaction information is controlled by one database server, if a new database server is to be added afterward, it is necessary to modify the software to a considerable extent. On the contrary, when it is composed as in this embodiment from the beginning, it is possible to add database servers 300, one by one. Moreover, when a new database server 300 is added, it will be not necessary to modify the application server 200.

Further, in the conventional bank or the like, the database which stores financial transaction information of the users has been divided into tables by items, such as an account balance data storage table, a withdrawal history storage table, and the like. And, when financial transaction information of an user is to be read out, data of this user has been read out from each of the tables.

Certainly, the procedure of this kind is effective to process simple data. However, if the kinds of financial transaction information of the users or the like are different, it takes time to read out the financial transaction information of the user from each of the tables. Therefore, in this embodiment, the financial transaction information of the users is integrated in a single data file. When any financial transaction information of one user is to be read out, the data server base 300 identifies the data file of this user in the account database 310, and reads out that data file, to thereby read out rapidly.

When the data file of the user is to be read out from the account database 310, the electronic bank 1 identifies the data file of the user based on the user's branch number and account number. Namely, from the user's branch number and account number, through a certain calculation or operation, the account database 310 where the data file of the user is stored and the storage location of the data file are found. Thus, upon the receipt of read out command of the user's data file, the storage location of data file of this user can be identified by the operation as mentioned above.

In this instance, a method would be devised to search for the account database where the user's financial transaction information is stored, by referring to a data table which is provided so as to match, for example, the user's branch number and account number with the account database where the user's financial transaction information is memorized. However, if the number of financial transaction information increases, it takes time for search. Therefore, in this embodiment, the account database 310 where the data file of the user is provided and its storage location are identified by the operation as described above, to thereby allow to search rapidly.

The account database 310 of each of database servers 300 stores, in general, data files of different users. However, exceptionally, for particular users, the data files of these particular users are provided in the account database 310 of a plurality of database servers 300.

Such particular users includes, for instance, holders of accounts expected to receive money from a number of users. Thus, when one single account is requested to receive money from a number of users, the process for depositing the payment in the account of such a particular user becomes busy, and the processing slows down.

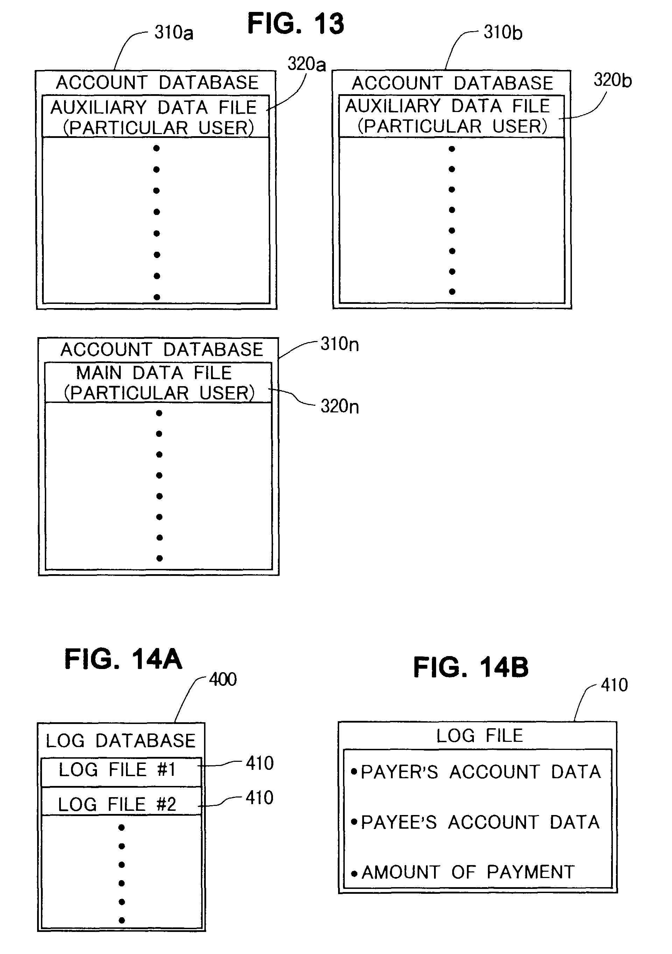

Therefore, as shown in Fig. 13, each of the account databases 310 of a plurality of database servers 300 is provided therein with data files for each particular user, wherein one of the data files serves as a main data file, and the data files for the particular user provided in the other account databases 310 serving as auxiliary data files. Fig. 13 shows an example wherein the auxiliary data files 320a and 320b for the particular user are provided in the account database 310a and 310b, respectively, and the main data file 320n for the particular user is provided in the account database 310n.

For instance, when a user (payer) having a data file in the account database 310a of the database server 300a, requests a particular user (payee) to receive money, data files for the user and the particular user in the account database 310a are identified, and the settlement is executed in the database server 300a.

When the settlement has been executed in the database server 300a, financial transaction information of the particular user in the auxiliary data file 320a for this particular user is transferred to the main data file 320n of the account database 310n, to integrate financial transaction information in the main data file 320n.

Now, the settlement execution procedure will be described.

When an user sends settling information (a request for a settlement) to the electronic bank 1, the application server 200 receives this settling information and creates a log file (history file) based on this settling information. The log file created a file describing data on a payer's account, a payee's account, settlement amount, the creation date, or the like. When the log file is created, it is stored in the log database 400.

Figs. 14A and 14B respectively show contents of a log database 400 and each log file 410 stored in the log database 400.

Then, the settlement is processed after having the log file 410 stored in the log database 400.

The application server 200 performs the process of withdrawing the payment from the payer's account, based on the contents (transaction object) of the log file 410 stored in the log database 400, and upon the completion of the process of withdrawing the payment, the application server 200 sends this information, namely settlement result information to the sender of the settling information, for instance, the aforementioned register 2 shown in Fig. 3. Next, after the transmission of the information announcing the completion of the process for withdrawing the payment, the process for depositing the payment in the payee's account is performed based on the contents of the log file.

Thus, only the process for withdrawing the payment is performed immediately, and upon the completion of the process for withdrawing, the settlement result information is transmitted to the sender of the settling information without waiting for the completion of the process for depositing the payment, whereby the settlement result information can be transmitted promptly. Therefore, in the example described above, the settlement can be executed in real time, even when the register 2 is busy. The application server 200 may perform the process for depositing the payment by batch processing or the like, based on the contents of the log file stored in the log database 400.

According to the present invention, the settlement is executed on the Internet by using the electronic bank in real time, whereby nothing is interposed between the users during the settlement, and the cost for the settlement can be greatly decreased.

While preferred embodiments of the invention have been described with a certain degree of particularity with reference to the drawings, obvious modifications and variations are possible in light of the above teachings. It is therefore to be understood that within the scope of the appended claims, the invention may be practiced otherwise than as specifically described.

## Claims

1. An electronic settling system for executing settlements on the Internet (10), comprising a computer (1), wherein said computer includes:
a storage means (1b) for storing financial transaction information of every user;
a settling information receiving means (1c) for receiving settling information transmitted from the user through a telecommunication line;
a settlement execution means (1d) for executing a settlement between the users based on the settling information received by said settling information receiving means; and
an updating means (1e) for updating the financial transaction information of the users stored in said storage means so as to reflect the content of the settlement executed by said settlement execution means.

2. An electronic settling system according to claim 1, wherein said settling information receiving means is adapted to receive the settling information transmitted from a portable information terminal of the user.

3. An electronic settling system according to claim 1 or 2, wherein the financial transaction information of the user stored in said storage means includes settlement history information of the user.

4. An electronic settling system according to one of claims 1 to 3, wherein said computer further includes means (lc) for transmitting the user's own financial transaction information to a device of the user in response to a request sent from the device of the user, which device is connected to said computer.

5. An electronic settling system according to claim 1, further comprising a purchase information input device (2) which includes means for transmitting purchase information that has been input therein to a portable information terminal of the user and means for receiving authenticated purchase information sent from the portable information terminal of the user and for transmitting the settling information based on the authenticated information to said computer;
said computer includes means for transmitting the information of settled results to said purchase information input device, when said computer receives said settling information transmitted from said purchase information input device through said settling information receiving means and then executes the settlement using said settlement execution means; and
said purchase information input device includes means for receiving the information of settled results transmitted from said computer.

6. An electronic settling system according to claim 1, further comprising a purchase information input device (2) which includes means for transmitting purchase information that has been input thereinto to a portable information terminal of the user;
said computer includes means for transmitting the information of settled results to said purchase information input device, when said computer receives authenticated settling information transmitted from the portable information terminal of the user through said settling information receiving means and then executes the settlement using said settlement execution means, the authenticated settling information being created by receiving the purchase information transmitted from said purchase information input device and authenticating the purchase information; and
said purchase information input device includes means for receiving the information of settled results transmitted from said computer.

7. An electronic settling system according to claim 1, further comprising an automatic vending machine (4) which includes means for receiving information transmitted from a portable information terminal of the user for specifying which article is to be purchased and transmitting the settling information based on the received information to said computer;
said computer includes means for transmitting the information of settled results to said automatic vending machine, when said computer receives the settling information transmitted from said automatic vending machine through said settling information receiving means and then executes the settlement using said settlement execution means; and
said automatic vending machine includes means for discharging the article based on the information of settled results transmitted from said computer.

8. An electronic settling system according to claim 1, further comprising an entrance-exit control means (6A, 6B) arranged at an entrance-exit gate (5A, 5B); wherein
said entrance-exit control means includes means for receiving authentication information transmitted from a portable information terminal of the user when the user is going to enter the entrance-exit gate;
said entrance-exit control means includes means for transmitting admission information to the portable information terminal of the user;
said entrance-exit control means includes means for receiving the admission information transmitted from the portable information terminal of the user, calculating a fee based on the admission information, and transmitting the settling information based on said admission information and the fee to said computer when the user is going to exit the entrance-exit gate;
said computer includes means for transmitting the information of settled results to said entrance-exit control means, when said computer receives the settling information transmitted from said entrance-exit control means through said settling information receiving means and then executes the settlement using said settlement execution means; and
said entrance-exit control means includes means for controlling the opening or closing of said entrance-exit gate based on the information of settled results transmitted from said computer.

9. An electronic settling system according to claim 1, wherein said computer includes means for transmitting the information of settled results to a portable information terminal which is the source of the information transmission when said computer receives the settling information transmitted from the portable information terminal through said settling information receiving means and then executes the settlement using said settlement execution means.

10. An electronic settling system according to claim 1, wherein the system is adapted for a settlement between a customer as one of the users and a shop as the other one of the users on the Internet;
at least some of articles provided by the shop are provided with a settlement restriction inhibiting a spot settlement so as to allow cancellation of the contract for a fixed period of time after the purchase of an article;
when an article with a settlement restriction is to be purchased by the customer and the settling information is sent to said computer, this settling information is made to include the settlement restriction information; and
in a case that said settling information includes said settlement restriction information, said settlement execution means of said computer executes the formal settlement, after the fixed period of time has elapsed, based on said settlement restriction information.

11. An electronic settling system according to claim 1, wherein the system is adapted for a settlement between a customer as one of the users and a shop as the other one of the users on the Internet;
at least some of articles provided by the shop are provided with a settlement restriction restricting the purchase of an article by particular customers;
when an article with a settlement restriction is to be purchased by the customer and the settling information is sent to said computer, this settling information is made to include the settling information; and
in a case that said settling information includes said settlement restriction information, said settlement execution means of said computer distinguishes whether the customer is included under the particular customers, and executes the settlement, based on the result of the distinction.

12. An electronic settling system according to claim 1, further comprising a ticket vending apparatus (40) which includes a means (40a) for sending inputted ticket purchase information to a portable information terminal of a user, and a means (40a) for receiving authenticated ticket purchase information sent from said portable information terminal of the user and sending settling information based on the authenticated ticket purchase information to said computer; wherein
said computer comprises:
a means for, when the settling information sent from said ticket vending apparatus is received by said settling information receiving means and the settlement is executed by said settlement execution means, sending the settlement result information to said ticket vending apparatus; and
said ticket vending apparatus comprises a means (40b) for receiving the settlement result information sent from the computer, and sending ticket data about the ticket of which settlement has been established to the portable information terminal of the user.

13. An electronic settling system according to claim 1, further comprising a ticket vending apparatus (40) which includes a means (40a) for sending inputted ticket purchase information to a portable information terminal of a user; wherein
said computer comprises a means for, when the settling information which is sent from the portable information terminal of the user and which is the ticket purchase information sent from said ticket vending apparatus and authenticated is received by said settling information receiving means, and the settlement is executed by said settlement execution means, sending the settlement result information to said ticket vending apparatus; and
said ticket vending apparatus comprises a means (40b) for receiving the settlement result information sent from the computer, and sending ticket data about the ticket of which settlement has been established to the portable information terminal of the user.

14. An electronic settling system according to claim 12 or 13, further comprising a means (60) for receiving a ticket data memorized in the portable information terminal of the user when the ticket data is sent, and a means (60) for authenticating the received ticket data, disposed at the entrance for admitting entry of the user provided that the ticket is presented.

15. An electronic settling system according to claim 1, wherein said storage means includes a data file for every user, and one said data file integrates financial transaction information of the one user; and
when said computer reads out the financial transaction information of a user, said computer specifies the data file of the user and reads out this data file.

16. An electronic settling system according to claim 15, wherein said computer comprises a plurality of database servers (300a, 300b,...); and
said storage means of each said database server includes said data file of each of a plurality of users.

17. An electronic settling system according to claim 16, wherein said computer reads out said data file of a user, by finding said data file server where said data file of this user is stored and the storage location of said data file for this user in said storage means of this database server, based on the user's branch number and account number.

18. An electronic settling system according to claim 16 or 17, wherein a particular one of said database servers is provided in said storage means thereof with a main data file (320n) for particular users, and the plurality of other said database servers are each provided in said storage means thereof with an auxiliary data file (320a, 320b) for said particular users; and
financial transaction information of said auxiliary data file is sent to the particular said database server, and financial transaction information of said particular users is integrated in said main data file.

19. An electronic settling system according to one of claims 1 and 15 to 18, wherein:
upon the receipt of settling information sent through the telecommunication line, said computer performs the process of withdrawing the payment from the payer's account, based on this settling information, and sends information about the completion of the process of withdrawing to the settling information sender when the process of withdrawing the payment is completed; and
after the transmission of the information about the completion of the process of withdrawing, said computer performs the process of depositing the payment in the payee's account.

20. An electronic settling system according to claim 19, wherein upon the receipt of settling information sent through the telecommunication line, said computer creates a log file (410) based on this settling information and memorizes the created log file in a log file database (400); and
said settlement execution means of said computer performs the settlement based on the contents of said log file memorized in said log file database.

21. An electronic settling system for executing settlements on the Internet, comprising a computer (1), wherein said computer includes:
a user electronic money data storage means (1b1) for memorizing user electronic money data;
an issuer electronic money data storage means (1b2) for memorizing electronic money data when electronic money is issued;
a receiving means (1c1) for receiving electronic money issuance demand information sent from a portable information terminal of a user;
a means for sending, upon the receipt of electronic money issuance demand information, electronic money data based on this electronic money issuance demand information from said user electronic money data storage means corresponding to the electronic money issuance demand information to said issuer electronic money data storage means, to thereby memorize the electronic money data in said issuer electronic money data storage means; and
an electronic money issuance means (1c2) for transmitting the electronic money data memorized in said issuer electronic money data storage means to a portable information terminal of a predetermined one of the users, based on the electronic money issuance demand information.

22. An electronic settling system according to claim 21, wherein said computer further comprises a means (1c1) for receiving an electronic money data sent from a portable information terminal of the user and memorizing this received electronic money data in said user electronic money data storage means for a predetermined user, based on this electronic money data.

23. An electronic settling system for executing settlements, comprising a card information processing apparatus (20) and a card authentication apparatus (100), wherein
said card information processing apparatus includes a means (20a) for receiving, when credit card or debit card or other card information memorized in a portable information terminal of a user is sent from this portable information terminal, such card information, and sending this card information to said card authentication apparatus;
said card authentication apparatus includes a means for receiving the card information sent from said card information processing apparatus, performing predetermined authentication based on this card information, and then sending authentication result information to said card information processing apparatus; and
said card information processing apparatus includes a means (20b) for receiving the authentication result information sent from said card authentication apparatus.

24. An electronic settling method for executing settlements on the Internet using a computer, comprising the steps of:
storing financial transaction information of every user in said computer;
upon receipt of settling information transmitted from the user through a telecommunication line, executing the settlement between the users based on the settling information; and
updating said financial transaction information of the users.

25. An electronic settling method according to claim 24, wherein the financial transaction information of the user stored in said computer includes settlement history information of the user.
